# EUROPÄISCHE PATENTSCHRIFT

(11) **EP 2 145 287 B1**
(45) Veröffentlichungstag und Bekanntmachung des Hinweises auf die Patenterteilung: **07.08.2013**
(21) Anmeldenummer: 08717735.8
(22) Anmeldetag: 13.03.2008
(51) Int. Cl.: G07C 9/00, G06K 9/00, H04L 9/32

(54) **VERFAHREN ZUR AUTHENTIFIZIERUNG EINER PERSON**
METHOD FOR AUTHENTICATING AN INDIVIDUAL
PROCÉDÉ POUR AUTHENTIFIER UNE PERSONNE

(30) Priorität: 14.03.2007 DE 102007012965
(43) Veröffentlichungstag der Anmeldung: 20.01.2010
(73) Patentinhaber: Bundesdruckerei GmbH, 10958 Berlin (DE)
(72) Erfinder: DRESSEL, Olaf, 14641 Wustermark (DE); BYSZIO, Frank, 16348 Wandlitz (DE); FRITZE, Frank, 12487 Berlin (DE); PAESCHKE, Manfred, 16348 Wandlitz (DE)
(74) Vertreter: Richardt Patentanwälte GbR
(86) Internationale Anmeldenummer: PCT/EP2008/052991
(87) Internationale Veröffentlichungsnummer: WO 2008/110597

(56) Entgegenhaltungen:
- EP-A2- 1 635 503
- US-A1- 2005 212 657
- US-A1- 2006 226 951
- Karger, Paul A.: "Privacy and Security Threat Analysis of the Federal Employee Personal Identity Verification (PIV) Program" Symposium On Usable Privacy and Security (Soups), 2006, July 12-14, 2006, Pittsburgh, PA, USA 14. Juli 2006 (2006-07-14), Seiten 1-8, XP002516335 Internet Gefunden im Internet: URL:http://cups.cs.cmu.edu/soups/2006/proc eedings/p114_karger.pdf> [gefunden am 2009-02-23]
- JUELS A ET AL: "Security and Privacy Issues in E-passports" SECURITY AND PRIVACY FOR EMERGING AREAS IN COMMUNICATIONS NETWORKS, 20 05. SECURECOMM 2005. FIRST INTERNATIONAL CONFERENCE ON ATHENS, GREECE 05-09 SEPT. 2005, PISCATAWAY, NJ, USA,IEEE, 5. September 2005 (2005-09-05), Seiten 1-12, XP010902874 ISBN: 978-0-7695-2369-9

## Beschreibung

Die Erfindung betrifft Verfahren zur Authentifizierung einer Person. Die Erfindung betrifft ferner Computerprogrammprodukte zur Durchführung der erfindungsgemäßen Verfahren. Ferner betrifft die Erfindung ein portables Gerät sowie eine Kontrolleinrichtung.

Unter dem Begriff "Authentifizierung" versteht man den Vorgang der Überprüfung, also der Verifikation, der behaupteten Identität eines Gegenübers, beispielsweise einer Person oder eines Computersystems. Personen, die an einem Flughafen per Flugzeug ankommen, durchlaufen beispielsweise eine Passkontrolle, bevor sie das Flughafengebäude verlassen können. Dabei übergibt eine Person ihren Reisepass einem Grenzschutzbeamten, der beispielsweise das Bild im Reisepass mit dem Gesicht der Person vergleicht und somit die Person authentifiziert und im Anschluss daran die Person passieren lässt. Nachteilig daran ist, dass eine große Anzahl von Grenzschutzbeamten notwendig ist, um möglichst alle ankommenden Flugpassagiere zu kontrollieren, was hohe Personalkosten zur Folge hat.

Personen werden auch von Zugangskontrollen, z. B. zu einem sicherheitsrelevanten Bereich einer Anlage, kontrolliert und können diese nur nach erfolgter Authentifizierung passieren. Falls sich eine Person nicht gegenüber der Zugangskontrolle authentifizieren kann, wird der Person der Zugang zu dem sicherheitsrelevanten Bereich verweigert. Hierzu verwendet die Person beispielsweise auch einen Ausweis, der von einer anderen Person oder maschinell überprüft wird. Dabei tritt jedoch das Problem auf, dass die Person, die den Ausweis verwendet, Daten von sich selbst preisgeben muss (so sind beispielsweise auf dem Personalausweis die Adresse und das Geburtsdatum der Person gespeichert), die jedoch nicht für die Durchführung der Authentifizierung vonnöten sind.

Aus "Privacy and Security Threat Analysis of the Federal Employee Personal Identity Verification (PIV) Program", Paul A. Karger, IBM Research Division, NY 10598, USA, Symposium On Usable Privacy and Security (Soups), July 12-14, 2006, Pittsburgh, PA, USA pages 1-8, XP002516335, gefunden im Internet am 23. Februar 2009 unter der URL http://cups.cs.cmu.edu/soups/2006/proceedings/p114_karger.pdf ist ein Kommunikationsprotokoll bekannt, bei welchem sich die beiden Kommunikationsteilnehmer A und B gegenseitig authentifizieren. Zunächst offenbart A seine Authentifizierungsdaten ("identity and credentials") gegenüber B. Nach erfolgreicher Überprüfung der Authentifizierungsdaten von A durch B übermittelt B wiederum seine Authentifizierungsdaten an A. Bei den ausgetauschten Authentifizierungsdaten handelt es sich unter anderem um verschlüsselte Zertifikate der jeweiligen Kommunikationsteilnehmer A und B.

Aufgabe der Erfindung ist es daher, verbesserte Verfahren zur Authentifizierung einer Person, wie etwa für eine Zugangskontrolle oder eine maschinellen Passkontrolle, anzugeben. Aufgabe der Erfindung ist es ferner, eine entsprechende Kontrolleinrichtung anzugeben.

Die der Erfindung zugrunde liegenden Aufgaben werden mit den unabhängigen Patentansprüchen gelöst. Erfindungsgemäße Weiterbildungen und Ausführungsformen sind in den Unteransprüchen angegeben.

Erfindungsgemäß wird ein Verfahren zur Authentifizierung einer Person angegeben. Die Person trägt dabei ein erfindungsgemäßes Gerät mit sich. Das Gerät weist zumindest eine Schnittstelle für die Kommunikation mit der Kontrolleinrichtung auf. Bei Annäherung des Geräts an die Kontrolleinrichtung empfängt das Gerät eine erste Anfrage von der Kontrolleinrichtung über die Schnittstelle. Mit der ersten Anfrage fordert die Kontrolleinrichtung ein erstes Zertifikat zur Authentifizierung der Person an. Daraufhin sendet das Gerät eine zweite Anfrage über die Schnittstelle an die Kontrolleinrichtung, wobei mit der zweiten Anfrage das Gerät ein zweites Zertifikat von der Kontrolleinrichtung anfordert. Nach Empfang des zweiten Zertifikats von der Kontrolleinrichtung überprüft das Gerät das zweite Zertifikat. Dabei stellt das Gerät über das zweite Zertifikat fest, ob die Kontrolleinrichtung eine Berechtigung hat, das erste Zertifikat von dem Gerät anzufordern. Gegebenenfalls übermittelt sodann das Gerät das erste Zertifikat an die Kontrolleinrichtung, falls durch die Überprüfung des zweiten Zertifikats die Berechtigung der Kontrolleinrichtung festgestellt worden ist.

Die Kontrolleinrichtung kann an das Gerät eine Authentifizierungsanforderung senden, wonach eine Authentifizierung der Person gegenüber dem Gerät erfolgen muss. Wenn das Gerät eine solche Authentifizierungsanforderung von der Kontrolleinrichtung empfängt, so fordert es die Person zur Authentifizierung auf. Dies kann dadurch erfolgen, dass die Person eine geheime Kennung, wie zum Beispiel eine PIN, in das Gerät eingibt, oder indem biometrische Daten von der Person erfasst werden. Das erste Zertifikat wird von dem Gerät an die Kontrolleinrichtung nur dann übermittelt, falls die Authentifizierung der Person erfolgreich war.

Falls die Kontrolleinrichtung eine solche Authentihzierungsanforderung nicht an das Gerät richtet, so fordert das Gerät die Person nicht zur Authentifizierung auf, so dass das erste Zertifikat auch ohne die Authentifizierung der Person gegenüber dem Gerät an die Kontrolleinrichtung übertragen wird.

Dies hat insbesondere den Vorteil, dass eine Authentifizierung der Person gegenüber dem Gerät nur dann erfolgen muss, wenn dies erforderlich ist, um den Sicherheitsanforderungen der jeweiligen Anwendung Genüge zu tragen. Für manche Anwendungen ist es nämlich ausreichend zu prüfen, ob sich ein zulässiges Gerät im Besitz der Person befindet. Es muss aber nicht überprüft werden, ob die Person auch der rechtmäßige Besitzer des Geräts ist. Für andere Anwendungen, die höhere Sicherheitsanforderungen haben, ist es dagegen auch notwendig zu prüfen, ob die Person der rechtmäßige Besitzer des Geräts ist, so dass sichergestellt werden kann, dass das Gerät nicht etwa entwendet worden ist.

Die Erfindung ist besonders vorteilhaft, da der Aufwand für die Authentifizierung der Person gegenüber dem Gerät nur dann betrieben werden muss, wenn dies die Sicherheitsanforderungen der jeweiligen Anwendung erforderlich machen. Beispielsweise kann es in einem geschützten Gebäudebereich verschiedene Zonen geben, die unterschiedliche Sicherheitsanforderungen haben. Beispielsweise genügt für eine erste Zone einer geringen Sicherheitsstufe die Prüfung, ob die Person, welche die Kontrolleinrichtung in die erste Zone hinein passieren möchten, im Besitz eines zugelassenen Geräts ist. Diese Prüfung wird beispielsweise durch Verifikation des ersten Zertifikats druchgeführt. Das erste Zertifikat kann auch die Zonen spezifizieren, zu denen der Träger des Geräts Zugang hat. Die Kontrolleinrichtung prüft dann, neben der Validität des Zertifikats, ob die in dem Zertifikat spezifizierten Zugangsrechte ausreichend für die erste Zone sind.

Für eine andere Zone einer gehobenen Sicherheitsstufe ist es dagegen zusätzlich erforderlich, dass sich die Person gegenüber dem Gerät authentifiziert.

Von besonderem Vorteil ist ferner, dass in beiden Fällen, das heißt unabhängig von dem Erfordernis der Authentifizierung der Person gegenüber dem Gerät, die Person gegenüber der Kontrolleinrichtung anonym bleiben kann. Das erste Zertifikat, welches von dem Gerät an die Kontrolleinrichtung übermittelt wird, muss nämlich nicht zwingend die Identität der Person offen legen. Im Gegenteil kann das erste Zertifikat lediglich spezifizieren, dass der Besitzer des Geräts bestimmte Rechte hat, wie zum Beispiel Rechte zum Betreten eines geschützten Gebäudebereichs oder dergleichen.

Bei dem ersten und/oder dem zweiten Zertifikat kann es sich um Zertifikate einer sogenannten Public Key Infrastructure (PKI) handeln, wie zum Beispiel um X.509-Zertifikate. Nach Empfang des ersten Zertifikats durch die Kontrolleinrichtung kann diese das erste Zertifikat verifizieren, indem die Kontrolleinrichtung eine Zertifikatskettenprüfung durchführt. Wenn das erste Zertifikat ausreichende Rechte spezifiziert und die Zertifikatskettenprüfung erfolgreich ist, kann die Kontrolleinrichtung den Zugang zu einem geschützten Gebäudeteil, beispielsweise durch Freigabe eines Drehkreuzes oder Entriegelung einer Tür, freigeben.

Nach einer Ausführungsform der Erfindung empfängt das Gerät die Authentifizierungsanforderung zusammen mit der ersten Anfrage. Beispielsweise kann die Authentifizierungsanforderung einen integralen Bestandteil der ersten Anfrage bilden.

Nach einer weiteren Ausführungsform der Erfindung ist die Authentifizierungsanforderung Teil des zweiten Zertifikats. Das zweite Zertifikat der Kontrolleinrichtung spezifiziert also, dass eine Authentifizierung der Person gegenüber dem Gerät erforderlich ist. Das Gerät empfängt daher die Authentifizierungsanforderung durch Empfang des zweiten Zertifikats von der Kontrolleinrichtung.

Nach einer Ausführungsform der Erfindung ist die Authentifizierungsanforderung signiert, beispielsweise mit dem privaten Schlüssel, der dem zweiten Zertifikat zugeordnet ist, signiert. Dieser private Schlüssel ist beispielsweise in einem geschützten Speicherbereich der Kontrolleinrichtung gespeichert.

Bei dem zweiten Zertifikat kann es sich um ein Zertifikat einer PKI handeln, so dass das Zertifikat von der Institution, welche das Zertifikat ausgestellt hat, signiert ist. Wenn die Authentifizierungsanforderung Teil des zweiten Zertifikats ist, so ist daher auch die Authentifizierungsanforderung von dieser Signatur des zweiten Zertifikats mit abgedeckt.

Die Signierung der Authentifizierungsanforderung ist besonders vorteilhaft, da auf diese Art und Weise Manipulationen verhindert werden können. Nach Erhalt der Authentifizierungsanforderung prüft nämlich das Gerät zunächst die digitale Signatur der Authentifizierungsanforderung. Nur wenn die digitale Signatur der Authentifizierungsanforderung valide ist, kann das Gerät das erste Zertifikat an die Kontrolleinrichtung senden. Falls eine solche Verifikation der Signatur der Authentifizierungsanforderung dagegen nicht möglich ist, wird die Kontrolleinrichtung von dem Gerät als manipuliert erkannt und es findet keine weitere Kommunikation mit der Kontrolleinrichtung statt.

Das Gerät wird somit von der Person verwendet, um sich gegenüber der Kontrolleinrichtung zu authentisieren. Erkennt nun die Kontrolleinrichtung die Anwesenheit des Geräts, so fordert es ein erstes Zertifikat vom Gerät an. Das Gerät sendet jedoch nicht sofort das erste Zertifikat an die Kontrolleinrichtung, sondern verlangt von der Kontrolleinrichtung zunächst das zweite Zertifikat, mittels dessen die Kontrolleinrichtung nachweist, dass sie berechtigt ist, das erste Zertifikat von dem Gerät anzufordern. Nur wenn dies der Fall ist, wird das erste Zertifikat an die Kontrolleinrichtung übermittelt, wodurch die Person gegenüber der Kontrolleinrichtung authentifiziert wird.

Bei dem ersten bzw. zweiten Zertifikat handelt es sich um von einer autorisierten Stelle oder Behörde (Public Key Infrastructure) herausgegebene Zertifikate, welche von der Kontrolleinrichtung bzw. dem Gerät als vertrauenswürdig eingestuft werden. Bei dem ersten bzw. zweiten Zertifikat kann es sich jeweils um kryptographisch gesicherte Datensätze handeln, die von der autorisierten Stelle bereitgestellt wurden. Die Zertifikate können ferner einen öffentlichen Schlüssel eines Schlüsselpaares für eine asymmetrische Verschlüsselung tragen. Die Zertifikate können zudem mit einer Signatur versehen sein.

Nach einer Ausführungsform der Erfindung weist das erste Zertifikat zumindest manche der folgende Daten auf: einen öffentlichen Schlüssel eines Schlüsselpaares für eine asymmetrische Verschlüsselung, eine Kennung des Geräts, eine Kennung des Herausgebers des Zertifikats, und weitere Daten. Die weiteren Daten betreffen eine positive oder negative Bestätigung entsprechend der mit der ersten Anfrage abgefragten Daten und/oder personenbezogene Daten.

Nach einer Ausführungsform der Erfindung weist das zweite Zertifikat zumindest manche der folgende Daten auf: einen öffentlichen Schlüssel eines Schlüsselpaares für eine asymmetrische Verschlüsselung, eine Kennung der Kontrolleinrichtung, eine Kennung des Herausgebers des Zertifikats, und weitere Daten. Die weiteren Daten betreffen die vom Gerät abzufragenden Daten oder Informationen.

Mit dem ersten Zertifikat kann daher eine bloße Bestätigung an die Kontrolleinrichtung zur Bestätigung der ersten Anfrage gesendet werden.
Damit bleibt die Privatsphäre der Person gegenüber der Kontrolleinrichtung gewahrt. Mit dem ersten Zertifikat können aber auch personenbezogene Daten an die Kontrolleinrichtung übertragen werden.

Bei dem Gerät kann es sich ferner um ein Gerät handeln, das von einer dazu autorisierten Stelle oder Behörde authentifiziert worden ist. Damit wird das erste Zertifikat von der Kontrolleinrichtung aus vertrauenswürdig eingestuft. Auch bei der Kontrolleinrichtung kann es sich um eine automatisierte Einrichtung handeln, die authentifiziert wurde, was sich wie im ersten Zertifikat auch im zweiten Zertifikat widerspiegelt. Das zweite Zertifikat wird daher auch vom Gerät als vertrauenswürdig eingestuft, wenn es z.B. eine Zertifikatskettenprüfung besteht und von einer zulässigen Instanz stammt.

Ferner kann das Gerät dazu verwendet werden, um den Benutzer gegenüber mehreren Kontrolleinrichtungen zu authentifizieren. Beispielsweise kann es sich bei einer ersten Kontrolleinrichtung um eine behördliche Kontrolleinrichtung handeln, z.B. automatisierte Passkontrolle am Flughafen, wohingegen es sich bei einer zweiten Kontrolleinrichtung um eine private Einrichtung handelt, bspw. ein Zugangssystem zu einem Stadion oder dergleichen.

Da die erste Kontrolleinrichtung behördliche Aufgaben wahrnimmt, hat sie viel mehr Rechte als die zweite Einrichtung. Damit darf die erste Kontrolleinrichtung über die erste Anfrage viel mehr Daten vom Gerät über die Person abfragen als die zweite Einrichtung. Damit das Gerät nicht per se auf eine erste Anfrage von irgendeiner Kontrolleinrichtung antwortet und die gewünschten Daten übermittelt, fragt das Gerät über die zweite Anfrage die Berechtigung des anfragenden Kontrolleinheit ab, die verlangten Daten abzufragen. Durch Erhalt des zweiten Zertifikats kann dann das Gerät feststellen, ob die anfragende Kontrolleinrichtung die entsprechende Berechtigung hat. Die Rechte der Kontrolleinrichtung zur Abfrage von Daten von dem Gerät können in dem zweiten Zertifikat spezifiziert sein. Das Gerät wird daraufhin also nur solche Daten mit dem ersten Zertifikat an die Kontrolleinrichtung übermitteln, die von diesen Rechten der Kontrolleinrichtung abgedeckt sind.

Nach einer Ausführungsform der Erfindung weist das Verfahren ferner den Schritt der Authentifizierung der Person gegenüber dem Gerät auf, wobei das erste Zertifikat nach erfolgreicher Authentifizierung der Person gegenüber dem Gerät übermittelt wird. Das Gerät ist typischerweise einer Person zugeordnet und von der Authentifizierungsbehörde für die Person authentifiziert. Aufgrund dessen wird das erste Zertifikat, das von dem Gerät an die Kontrolleinrichtung übermittelt wird, als vertrauenswürdig von der Kontrolleinrichtung eingestuft. Die Kontrolleinrichtung muss also weder selbst die Person authentifizieren noch müssen persönlichen Daten der Person an die Kontrolleinheit übertragen werden.

Es kann jedoch sein, dass das Gerät nicht von der ihm zugeordneten Person verwendet wird, sondern von einer anderen, dem Gerät nicht zugeordneten Person verwendet wird. Beispielsweise kann das Gerät von einem Dieb gestohlen worden sein, der sich mit dem Gerät Zugang zu einer sicherheitsrelevanten Einrichtung verschaffen will, wobei es sich bei der Kontrolleinrichtung dann um eine Zugangserfassung und Zugangskontrolleinrichtung für die sicherheitsrelevante Einrichtung handelt. Um sicherzugehen, dass die Person, der das Gerät zugeordnet ist, tatsächlich das Gerät bei sich trägt, wird erfindungsgemäß nach dieser Ausführungsform vom Gerät die Authentizität des Benutzers abgefragt. Erst danach erfolgt die Übermittlung des ersten Zertifikats, womit der dem Gerät zugeordnete Benutzer gegenüber der Kontrolleinrichtung authentifiziert wird.

Nach einer Ausführungsform der Erfindung wird in der ersten Anfrage spezifiziert, dass bei der Übermittlung des ersten Zertifikats eine Authentifizierung der Person gegenüber dem Gerät erfolgen muss.

Nach einer Ausführungsform der Erfindung fragt das Gerät personenbezogene Daten von der Person ab. Zur Authentifizierung der Person gegenüber dem Gerät werden die abgefragten personenbezogenen Daten vom Gerät verifiziert. Das der Person zugeordnete Gerät verifiziert daher die Authentizität der Person. Die Kontrolleinrichtung erhält somit keine personenbezogenen Daten. Damit wird die Privatsphäre der Person gegenüber der Kontrolleinrichtung geschützt.

Nach einer Ausführungsform der Erfindung authentifiziert sich die Person durch eine der Person zugeordneten Chipkarte und durch Eingabe einer der Chipkarte zugeordneten PIN gegenüber dem Gerät. Das Gerät kann daher eine Aufnahmevorrichtung für eine Chipkarte der Person aufweisen und die Person auffordern, die Chipkarte in die Aufnahmevorrichtung einzulegen. Im Anschluss daran wird von der Person die für die Chipkarte und nur der Person bekannte PIN eingegeben, um sich somit gegenüber dem Gerät zu authentifizieren.

Nach einer anderen Ausführungsform der Erfindung handelt sich bei den personenbezogenen Daten nur um eine PIN, der für die Person von dem Gerät vergeben worden ist.

Nach einer Ausführungsform der Erfindung handelt es sich bei den personenbezogenen Daten um erste biometrische Daten der Person, wobei die ersten biometrischen Daten auf dem Gerät hinterlegt sind. Zur Authentifizierung der Person gegenüber dem Gerät fragt das Gerät von der Person, die das Gerät gerade benutzt, zweite biometrische Daten ab. Diese zweiten biometrischen Daten werden sodann mit den ersten biometrischen Daten, die für die Person, für die das Gerät authentifiziert worden ist, auf dem Gerät hinterlegt sind, verglichen, um somit die Identität zwischen dem Benutzer des Geräts und der Person, für die das Gerät authentifiziert worden ist, nachzuweisen.

Bei den ersten biometrischen Daten handelt es sich beispielsweise um Daten betreffend einen Fingerabdruck der Person, für die das Gerät authentifiziert ist. Entsprechend wird von der Person, die das Gerät benutzt, ein Fingerabdruck eingescannt und die somit gewonnenen zweiten biometrischen Daten mit den ersten biometrischen Daten betreffend den Fingerabdruck verglichen. Alternativ kann es sich bei den ersten biometrischen Daten um Daten betreffend einen Iris-Scan, eine DNA-Sequenz oder um ein Gesichtsmerkmal der Person handeln, für die das Gerät authentifiziert worden ist.

Nach einer Ausführungsform der Erfindung werden ferner zweite biometrische Daten von der Kontrolleinrichtung an das Gerät übermittelt. Das Gerät gleicht sodann die ersten biometrischen Daten mit den zweiten biometrischen Daten ab. Ferner erfolgt die Übermittlung des ersten Zertifikats an die Kontrolleinrichtung, falls durch den Abgleich der ersten und zweiten biometrischen Daten durch das Gerät festgestellt worden ist, dass die zweiten biometrischen Daten der Person zugeordnet sind. Alternativ erfolgt die Übermittlung einer positiven Bestätigungsnachricht mit einem Zertifikat , falls durch den Abgleich der ersten und zweiten biometrischen Daten durch das Gerät festgestellt worden ist, dass die zweiten biometrischen Daten der Person zugeordnet sind. Anderenfalls erfolgt eine Übermittlung einer negativen Bestätigungsnachricht, falls durch den Abgleich der ersten und zweiten biometrischen Daten durch das Gerät festgestellt worden ist, dass die zweiten biometrischen Daten nicht der Person zugeordnet sind.

Die Kontrolleinrichtung kann somit zweite biometrische Daten, über die beispielsweise eine gesuchte Person identifizierbar ist, an das Gerät übermitteln. Das Gerät vergleicht dann intern die zweiten biometrischen Daten mit den ersten biometrischen Daten, die der Person zugeordnet sind, für die das Gerät authentifiziert worden ist. Falls eine Übereinstimmung festgestellt wird, wird dies beispielsweise über die positive Bestätigungsnachricht an die Kontrolleinrichtung übermittelt, womit damit der Kontrolleinrichtung signalisiert wird, dass es sich bei dem Träger des Geräts um die gesuchte Person handelt.

Nach einer Ausführungsform der Erfindung werden personenbezogene Daten mit dem ersten Zertifikat gesendet, falls durch die Überprüfung des zweiten Zertifikats die Berechtigung der Kontrolleinrichtung zur Anforderung der personenbezogenen Daten festgestellt worden ist. Mit dem Zertifikat können daher die angeforderten personenbezogenen Daten verschlüsselt an die Kontrolleinheit übermittelt werden. Damit wird vor der Übermittlung der personenbezogenen Daten die Berechtigung der anfragenden Stelle überprüft, so dass die Privatsphäre der Person gegenüber unbefugten Einrichtungen gewahrt bleibt.

Nach einer Ausführungsform der Erfindung weist das Verfahren ferner den Schritt der Ermittlung, ob die Kontrolleinrichtung die Berechtigung zur Abfrage des ersten Zertifikats bzw. der personenbezogenen Daten über die Schnittstelle für die Kommunikation mit dem Gerät hat, wobei das erste Zertifikat bzw. die personenbezogenen Daten nur gesendet werden, wenn die Kontrolleinrichtung berechtigt ist, diese über die Schnittstelle abzufragen.

Das Gerät kann mehrere Kommunikationsschnittstellen aufweisen. Beispielsweise kann das Gerät kontaktlose Kommunikationsschnittstellen, die die Kommunikation zur Kontrolleinrichtung mittels dem Bluetooth-, dem WLAN-, dem WiMAX-, dem RFID-, dem GSM-, dem GPRS- oder dem UMTS-Standard ermöglichen. Das Gerät kann auch kontaktbehaftete Schnittstellen, wie etwa einen USB-Port oder einen Card-Connector aufweisen. Das Gerät entscheidet anhand der Kommunikationsschnittstelle bzw. anhand des Protokolls, das zur Übertragung des ersten Zertifikats verwendet wird, ob das erste Zertifikat bzw. die personenbezogenen Daten an die Kontrolleinrichtung über diese Kommunikationsschnittstelle gesendet werden oder ob diese aufgrund der "falschen Kommunikationsschnittstelle" nicht gesendet werden.

Die oben angegebenen Standards haben unterschiedliche Reichweiten, innerhalb denen eine Kommunikation des Geräts zur Kontrolleinrichtung durchgeführt werden kann. Das Gerät kann nun in Abhängigkeit vom verwendeten Kommunikationsstandard und damit in Abhängigkeit vom Abstand zur Kontrolleinrichtung das erste Zertifikat bzw. die personenbezogenen Daten senden oder nicht. Beispielsweise kann auf dem Gerät spezifiziert sein, dass, falls sensible Daten (Fingerabdruckdaten, etc.) einer Person von der Kontrolleinrichtung abgefragt werden, nur über eine kontaktbehaftete Kommunikation, z.B. über den USB-Port, übertragen werden, während ein erstes Zertifikat ohne personenbezogene Daten auch über einen GSM-Kanal gesendet werden darf.

In einem weiteren Aspekt betrifft die Erfindung Computerprogrammprodukte mit computerausführbaren Instruktionen zur Durchführung der erfindungsgemäßen Verfahren.

In einem anderen Aspekt betrifft die Erfindung ein portables Gerät zur Authentifizierung einer Person gegenüber einer Kontrolleinrichtung.

In einem anderen Aspekt betrifft die Erfindung eine Kontrolleinrichtung zur Abfrage eines Zertifikats von einem portablen Gerät.

Im Weiteren werden bevorzugte Ausführungsformen der Erfindung mit Bezugnahme auf die Zeichnungen näher erläutert. Es zeigen:
- Fig. 1: ein schematisches Blockdiagramm einer Kontrolleinrichtung und eines Geräts,
- Fig. 2: ein Flussdiagramm, das Schritte des erfindungsgemäßen Verfahrens grafisch wiedergibt,
- Fig. 3: ein Blockdiagramm eines Geräts,
- Fig. 4: illustrativ ein Gerät für die Authentifizierung einer Person gegenüber einer Kontrolleinrichtung,
- Fig. 5: ein Ablaufdiagramm, welches Schritte, die bei Ausführung der erfindungsgemäßen Verfahren durchgeführt werden, wiedergibt,
- Fig. 6: zeigt illustrativ die Erfassungsbereiche, innerhalb denen ein Gerät in Abhängigkeit vom Typ der verwendeten Schnittstelle, von einer Kontrolleinrichtung detektiert werden kann und innerhalb welche bestimmten personenbezogenen Daten übermittelt werden dürfen.

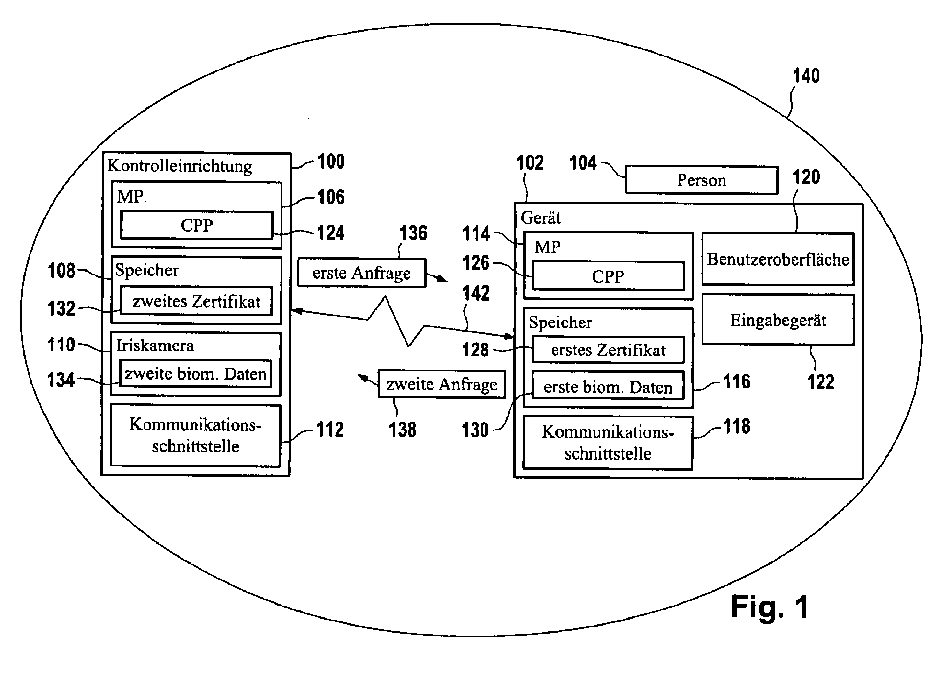

Fig. 1 zeigt schematisch ein Blockdiagramm einer Kontrolleinrichtung 100 und eines Geräts 102. Die Kontrolleinrichtung 100 hat einen Mikroprozessor 106, einen Speicher 108, eine Iriskamera 110 und eine Kommunikationsschnittstelle 112. Das Gerät 102 hat einen Mikroprozessor 114, einen Speicher 116, eine Kommunikationsschnittstelle 118, eine Benutzeroberfläche 120 und ein Eingabegerät 122. Das Gerät 102 ist portabel und wird von einer Person 104 getragen.

Betritt die Person 104 mit dem Gerät 102 einen Erfassungsbereich 140 der Kontrolleinrichtung 100, so kann die Kontrolleinrichtung 100 über die Kommunikationsschnittstelle 112 die Anwesenheit des Geräts 102 detektieren. Der Erfassungsbereich 140 hängt dabei ab von der Übertragungstechnologie, die in der Kommunikationsschnittstelle 112 implementiert ist und über die das Gerät 102 detektiert wird. Es wird dabei angenommen, dass die Kommunikationsschnittstelle 112 kompatibel ist mit der Kommunikationsschnittstelle 118, also beispielsweise beide Kommunikationsschnittstellen für die Kommunikation mit Bluetooth vorgesehen sind. Die Detektion des Geräts 102 durch die Kontrolleinrichtung kann beispielsweise durch den im Bluetooth-Standard angegebenen Discovery-Modus erfolgen.

Um die Authentizität des Geräts 102 bzw. der Person 104 festzustellen, führt der Mikroprozessor 106 ein Computerprogrammprodukt 124 aus, welches auf dem Speicher 108 permanent gespeichert ist und zur Ausführung in den Mikroprozessor geladen wird. Komplementär dazu führt das Gerät 102 bzw. der Mikroprozessor 114 des Geräts 102 ein Computerprogrammprodukt 126 aus, welches auf dem Speicher 116 gespeichert ist und zur Ausführung in den Mikroprozessor 114 geladen wird.

Nach der Detektion des Geräts 102 im Erfassungsbereich 140 sendet das Computerprogrammprodukt 124 eine erste Anfrage 136 über die Kommunikationsschnittstelle 112 und über eine Luftschnittstelle 142 an die Kommunikationsschnittstelle 118, so dass die erste Anfrage 136 vom Gerät 102 empfangen wird. Mit der ersten Anfrage fordert die Kontrolleinrichtung ein erstes Zertifikat 128 vom Gerät 102 an, mit dem die Authentizität des Geräts 102 bzw. der Person 104 gegenüber der Kontrolleinrichtung 100 nachgewiesen wird. Nach der hier beschriebenen Ausführungsform ist das erste Zertifikat 128 in dem Speicher 116 gespeichert.

Nach Empfang der ersten Anfrage 136 sendet das Computerprogrammprodukt 126 eine zweite Anfrage 138 über die Kommunikationsschnittstelle 118 und die Luftschnittstelle 142 an die Kontrolleinrichtung 100, wo sie über die Kommunikationsschnittstelle 112 empfangen wird. Mit der zweiten Anfrage 138 fordert das Gerät 102 ein zweites Zertifikat 132 von der Kontrolleinrichtung an, über das die Kontrolleinrichtung 100 gegenüber dem Gerät 102 einen Nachweis erbringt, dass es berechtigt ist, das erste Zertifikat 128 vom Gerät 102 anzufordern. Das zweite Zertifikat 132 ist dabei in dem Speicher 108 gespeichert. Nach Erhalt der zweiten Anfrage 138 übermittelt das Computerprogrammprodukt 124 das zweite Zertifikat 132 an das Gerät 102.

Das Computerprogrammprodukt 126 überprüft das zweite Zertifikat 132, das von einer autorisierten Stelle authentifiziert ist, und stellt somit fest, ob die Kontrolleinrichtung 100 berechtigt ist, das erste Zertifikat 128 vom Gerät 102 anzufordern. Falls dies der Fall ist, wird das erste Zertifikat 128 an die Kontrolleinrichtung 100 gesendet, wodurch sich das Gerät 102 bzw. die Person 104, die das Gerät mit sich trägt, gegenüber der Kontrolleinrichtung 100 authentifiziert.

In der ersten Anfrage 136, die von der Kontrolleinrichtung 100 an das Gerät 102 übermittelt worden ist, kann das Computerprogrammprodukt 124 ferner spezifiziert haben, dass vor Übermittlung des ersten Zertifikats 128 eine Authentifizierung der Person 104 gegenüber dem Gerät 102 erfolgen muss. Das Gerät 102 ist für eine bestimmte Person beispielsweise von einer Authentifizierungsbehörde authentifiziert und damit einer bestimmten Person eineindeutig zugeordnet. Dies ist dann der Fall, wenn die Kontrolleinrichtung so konfiguriert ist, dass sie sich in einem ersten Betriebsmodus befindet. Statt in der Anfrage 136 kann auch in dem zweiten Zertifikat 132 spezifiziert sein, dass die Authentifizierung der Person 104 gegenüber dem Gerät 102 erfolgen muss, wenn sich die Kontrolleinrichtung in dem ersten Betriebsmodus befindet.

In einem zweiten Betriebsmodus ist die Kontrolleinrichtung 100 dagegen so konfiguriert, dass in der Anfrage 136 und in dem zweiten Zertifikat 132 nicht spezifiziert ist, dass die Authentifizierung der Person 104 gegenüber dem Gerät 102 erfolgen muss.

Der erste Betriebsmodus ist also dadurch definiert, dass eine Authentifizierung der Person 104 gegenüber dem Gerät 102 erfolgen muss, wohingegen der zweite Betriebsmodus ist dadurch definiert ist, dass eine solche Authentifizierung nicht erforderlich ist.

In dem Speicher 116 sind erste biometrische Daten 130 der dem Gerät 102 zugeordneten Person hinterlegt. Zur Verifizierung, dass es sich bei der Person 104 um die dem Gerät 102 zugeordneten Person handelt, weist das Gerät 102 das Eingabegerät 122 auf, bei dem es sich beispielsweise um einen Scanner für Fingerabdrücke handelt. Dementsprechend handelt es sich bei den ersten biometrischen Daten 130 um Daten betreffend den Fingerabdrucks der dem Gerät 102 zugeordneten Person. Die Person 104, die das Gerät mit sich trägt, wird somit über die Benutzeroberfläche 120 aufgefordert, den Finger auf das Eingabegerät 122 (Scanner) zu legen, so dass Daten in Bezug auf den Fingerabdruck der Person 104 generiert werden können, die mit den ersten biometrischen Daten 130 sodann verglichen werden, wodurch die Authentizität der Person 104 nachgewiesen werden kann. Nur wenn die von der Person 104 ermittelten Daten hinsichtlich des Fingerabdrucks mit den ersten biometrischen Daten 130 übereinstimmen, wird das erste Zertifikat 128 an die Kontrolleinrichtung 130 gesendet, wodurch sich die erste Person 104 gegenüber der Kontrolleinrichtung 100 authentifiziert hat.

Alternativ kann es sich bei den personenbezogenen Daten um einen PIN handeln, der auf dem Speicher 116 gespeichert ist und nur der Person, der das Gerät 102 zugeordnet ist, bekannt ist. Die Person 104, die das Gerät 102 mit sich trägt, wird sodann über die Benutzeroberfläche 120 aufgefordert, den PIN in das Eingabegerät 122, das nach diesem Beispiel einer Tastatur entspricht, einzugeben. Falls der eingegebene PIN mit dem auf dem Speicher 116 hinterlegten PIN übereinstimmt, erfolgt die Übermittlung des ersten Zertifikats 128 an die Kontrolleinheit 100.

Bei dem Gerät 102 kann es sich auch um ein relativ kleines tragbares Gerät 102 handeln, bei dem aus Gründen der Miniaturisierung keine Benutzeroberfläche 120 und kein Eingabegerät 122 vorgesehen sind. Um biometrische Daten der Person 104 zur Authentifizierung der Person 104 gegenüber der Kontrolleinrichtung 100 zu verwenden, weist die Kontrolleinrichtung 100 die Iriskamera 110 auf, mit der ein Bild der Iris der Person 104 gemacht wird, woraus zweite biometrische Daten 134 betreffend die Iris der Person 104 ermittelt werden. Die zweiten biometrischen Daten 134 werden sodann von der Kontrolleinrichtung 100 an das Gerät 102 übertragen, wo die zweiten biometrischen Daten 134 mit den ersten biometrischen Daten 130, die in diesem Falle Daten betreffend die Iris der Person, die dem Gerät 102 zugeordnet ist, betreffen, verglichen. Alternativ können die zweiten biometrischen Daten 134 auch unmittelbar durch das Gerät 102 erfaßt werden, wenn dieses einen entsprechenden Sensor aufweist.

Nur wenn die zweiten biometrischen Daten 134 mit den ersten biometrischen Daten 130 übereinstimmen, wird das erste Zertifikat 128 an die Kontrolleinrichtung 100 gesendet und damit die Person 104 gegenüber der Kontrolleinrichtung 100 authentifiziert.

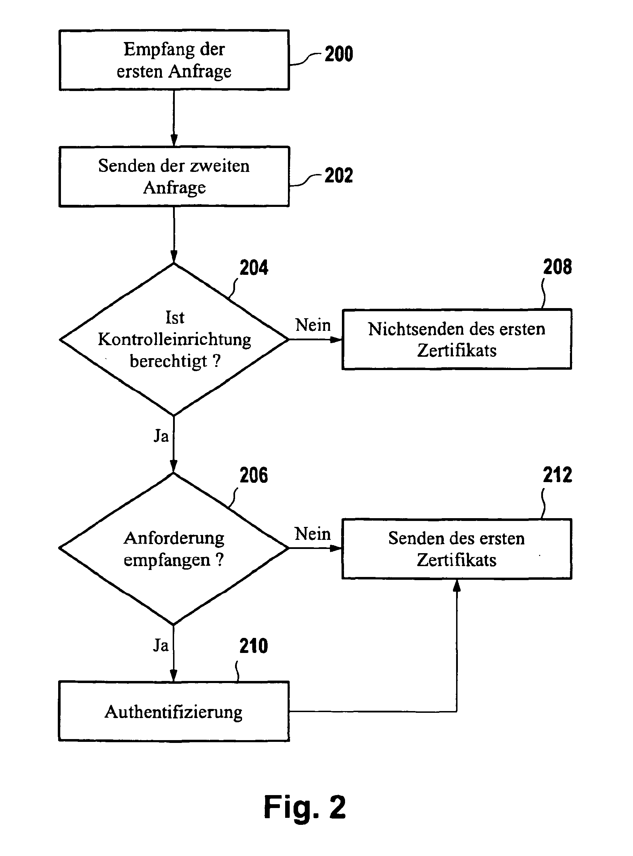

Fig. 2 zeigt ein Flussdiagramm, das Schritte des erfindungsgemäßen Verfahrens zur Authentifizierung einer Person gegenüber einer Kontrolleinrichtung zeigt. Die Person trägt ein Gerät mit sich, das zumindest eine Schnittstelle für die Kommunikation mit der Kontrolleinrichtung aufweist. Verfahrensgemäß empfängt das Gerät über die Schnittstelle eine erste Anfrage von der Kontrolleinrichtung. Mit der ersten Anfrage fordert die Kontrolleinrichtung ein erstes Zertifikat zur Authentifizierung der Person von dem Gerät an. Die erste Anfrage kann eine Authentifizierungsanforderung beinhalten, d.h. dass eine Authentifizierung der Person gegenüber dem Gerät erfolgen muss. Die erste Anfrage kann z.B. mit dem privaten Schlüssel der Kontrolleinrichtung signiert sein.

In Schritt 202 sendet das Gerät über die Schnittstelle eine zweite Anfrage an die Kontrolleinrichtung. Mit der zweiten Anfrage fordert das Gerät ein zweites Zertifikat von der Kontrolleinrichtung an. Nach Erhalt des zweiten Zertifikats von der Kontrolleinrichtung überprüft das Gerät in Schritt 204, ob die Kontrolleinrichtung berechtigt ist, das erste Zertifikat von dem Gerät anzufordern.

Falls das Gerät anhand des zweiten Zertifikats feststellt, dass die Kontrolleinrichtung nicht die Berechtigung hat, das erste Zertifikat vom Gerät anzufordern, wird das Verfahren mit Schritt 208 abgebrochen und das erste Zertifikat wird nicht gesendet. Falls das Gerät anhand des zweiten Zertifikats feststellt, dass die Kontrolleinrichtung eine Berechtigung hat, das erste Zertifikat vom Gerät anzufordern, wird das Verfahren mit Schritt 206 fortgesetzt. Alternativ oder zusätzlich zu der ersten Anfrage kann das zweite Zertifikat die Authentifizierungsanforderung beinhalten.

In dem Schritt 206 wird dann geprüft, ob das Gerät die Authentifizierungsanforderung von der Kontrolleinrichtung empfangen hat. Wenn das der Fall ist, wird die Person zur Authentifizierung gegenüber dem Gerät in dem Schritt 210 aufgefordert. Nach erfolgreicher Authentifizierung wird das erste Zertifikat in dem Schritt 212 über die Schnittstelle von dem Gerät an die Kontrolleinrichtung gesendet. Falls in dem Schritt 206 festgestelt wird, dass keine Authentifizierungsanforderung empfangen worden ist, wird ohne vorherige Authentifizierung der Person gegenüber dem Gerät zu dem Schritt 212 gegangen.

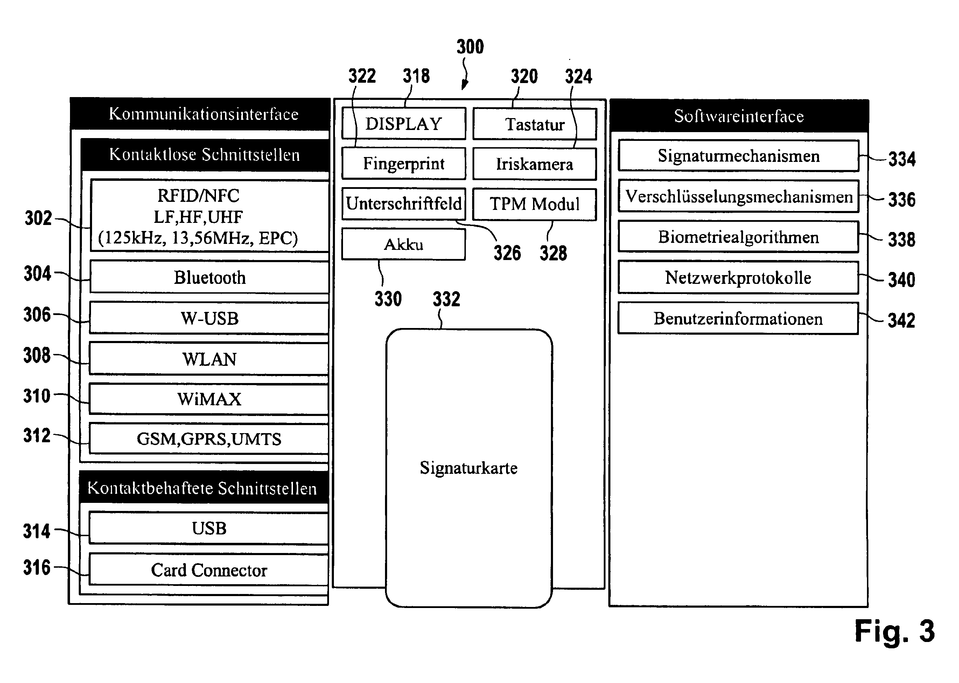

Fig. 3 zeigt ein Blockdiagramm eines Geräts 300. Das Gerät 300 weist mehrere Kommunikationsinterfaces (Kommunikationsschnittstellen) auf. Die Kommunikationsschnittstellen lassen sich in kontaktlose und kontaktbehaftete Schnittstellen unterteilen, wobei über kontaktlose Schnittstellen eine Funkverbindung zu einer entsprechenden Kontrolleinrichtung etabliert wird, während bei kontaktbehafteten Schnittstellen eine galvanische Verbindung oder ein körperlicher anderer Kontakt zwischen dem Gerät und der Kontrolleinrichtung besteht.

An kontaktlosen Schnittstellen weist das Gerät 300 eine RFID-(Radio Frequency Identification) bzw. NFC-(Near Field Communication)-Schnittstelle 302 auf. Ferner weist das Gerät eine Schnittstelle 304 für Bluetooth auf. Darüber hinaus hat das Gerät Schnittstellen 306, 308, 310 und 312 für Wireless-USB (W-USB), WLAN, WiMAX bzw. GSM, GPRS, UMTS.

An kabelbehafteten Schnittstellen weist das Gerät eine USB-Schnittstelle 314 und einen Card Connector 316 auf. Der Vorteil von mehreren Schnittstellen ist, dass das Gerät 300 eine Kommunikation mit relativ vielen Kontrolleinrichtungen, die ja nicht über alle Schnittstellen verfügen müssen, aufnehmen kann. Das Gerät 300 ist daher sehr flexibel einsetzbar.

Das Gerät 300 weist ferner ein Display 318 auf, das verwendet wird, um mit der Person, die das Gerät 300 mit sich trägt, zu kommunizieren. Um eine Eingabe, beispielsweise die Eingabe eines PINs, zu ermöglichen, hat das Gerät zudem eine Tastatur 320. Das Gerät hat einen Scanner 322 zur Aufnahme eines Fingerprints (Fingerabdrucks) der Person bzw. eine Iriskamera 324, um ein Bild der Iris der Person, die das Gerät 300 mit sich trägt, zu machen. Das Gerät hat ferner ein Unterschriftenfeld 326, so dass die Person eine Unterschrift auf dem Gerät 300 hinterlegen kann.

Ferner verfügt das Gerät 300 über ein TPM-Modul 328. Das Akronym TPM steht für Trusted Platform Module. Ein TPM-Modul 328 ist im Wesentlichen ein Chip, der als Teil einer TCG-Spezifikation auf dem Gerät 300 implementiert ist. Das TPM-Modul 328 kann als eine fest eingebaute Smartcard angesehen werden, mit dem Unterschied, dass das TPM-Modul nicht an einen konkreten Benutzer, sondern an das Gerät 300 gebunden ist. Das TPM-Modul 328 ist passiv und kann weder den Boot-Vorgang noch den Betrieb des Geräts 300 direkt beeinflussen. Auf dem TPM-Modul 328 ist eine eindeutige Kennung hinterlegt, die zur Identifizierung des Geräts 300 verwendet werden kann.

Das Gerät 300 hat ferner einen Akkumulator (Akku) 330, der die elektrische Energie zum Betrieb des Geräts 300 bereitstellt. Ferner verfügt das Gerät 300 über eine Aufnahmevorrichtung für eine Chipkarte 332, die die Person, die das Gerät 300 mit sich trägt, einstecken kann und sich somit durch Eingabe eines PINs betreffend die Chipkarte 332 gegenüber dem Gerät authentifizieren kann.

Zur Durchführung des erfindungsgemäßen Verfahrens, wie zuvor beschrieben, weist das Gerät 300 ferner ein oder mehrere Computerprogramme auf, vergleiche hierzu das Computerprogrammprodukt 126 in Figur 1. Das Computerprogrammprodukt weist computerausführbare Instruktionen auf, in denen Signaturmechanismen 334 zur Signierung von Nachrichten, wie beispielsweise die zweite Anfrage 138 (vergleiche Fig. 1), die vom Gerät 300 an eine Kontrolleinrichtung gesendet wird. Entsprechend weist das Computerprogrammprodukt Instruktionen zur Durchführung von Verschlüsselungsmechanismen 336, von Biometriealgorithmen 338, von Netzwerkprotokollen 340 und zur Erfassung von Benutzerinformationen 342, bspw. über die Tastatur 320, auf.

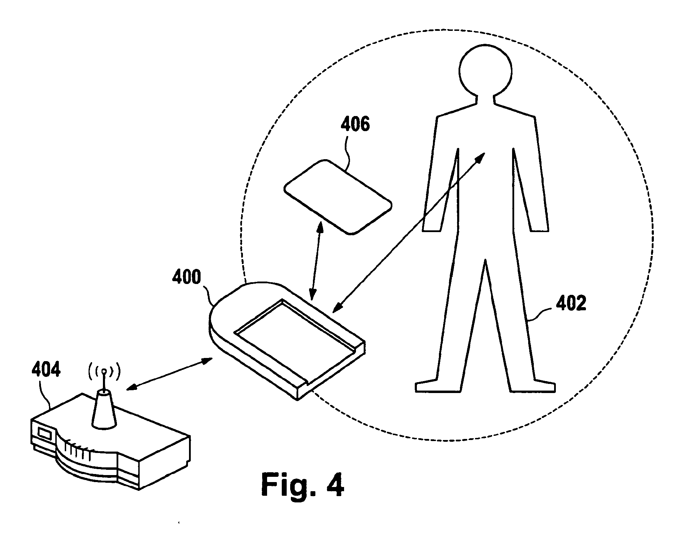

Fig. 4 zeigt illustrativ ein Gerät 400 für die Authentifizierung einer Person 402 gegenüber einer Kontrolleinrichtung 404. Wie bereits zuvor beschrieben, kann der Prozess der Authentifizierung der Person 402 gegenüber der Kontrolleinrichtung 404 erfordern, dass sich die Person 402 gegenüber dem Gerät 400 authentifiziert. Das Gerät 400 weist dazu eine Aufnahmevorrichtung oder zumindest ein Lesegerät für eine Chipkarte 406 der Person auf. Das Lesegerät 400 liest, nachdem die Person 402 ihre Chipkarte 406 dem Gerät 400 zugeführt hat, die auf der Chipkarte 406 hinterlegten Daten ab und erfragt von der Person 402 einen der Chipkarte 406 zugeordneten PIN. Gibt die Person 402 den der Chipkarte 406 zugeordneten, richtigen PIN ein, so hat sich die Person 402 gegenüber dem Gerät 400 authentifiziert und das Gerät kann dann das erste Zertifikat an die Kontrolleinrichtung 404 übermitteln, um somit der Kontrolleinrichtung 404 anzuzeigen, dass es sich bei der Person 402 tatsächlich um die dem Gerät 400 zugeordneten Person handelt.

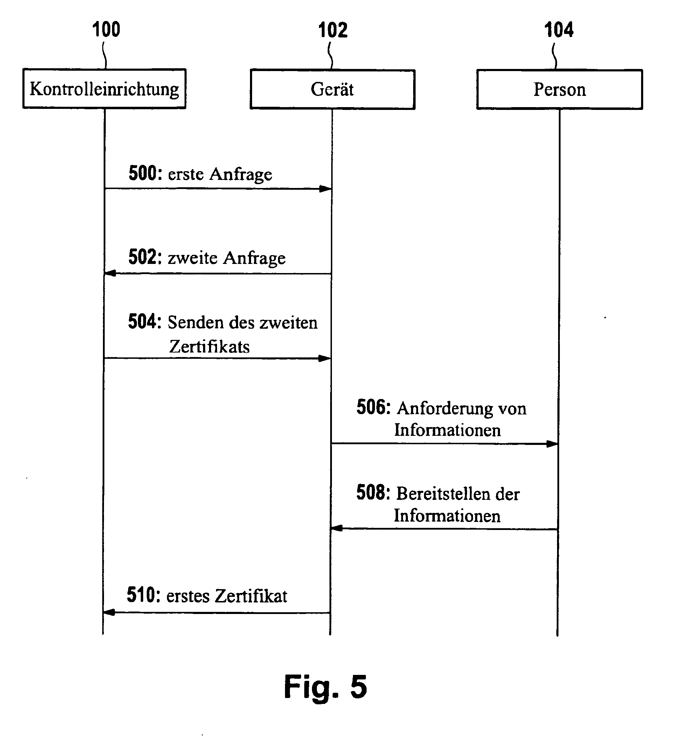

Fig. 5 zeigt in einem Ablaufdiagramm Schritte, die bei Ausführung des erfindungsgemäßen Verfahrens von der Kontrolleinrichtung 100, dem Gerät 102 bzw. der Person 104 durchgeführt werden. Dabei wurden für die Kontrolleinrichtung, das Gerät und die Person die aus Fig. 1 bekannten Bezugszeichen verwendet. Nachdem die Kontrolleinrichtung 100 die Anwesenheit des Geräts 102 detektiert hat, sendet in Schritt 500 die Kontrolleinrichtung eine erste Anfrage an das Gerät 102, wobei mit der ersten Anfrage die Kontrolleinrichtung ein erstes Zertifikat zur Authentifizierung der Person 104, die das Gerät 102 mit sich trägt, anfordert. Nach Empfang der ersten Anfrage sendet in Schritt 502 das Gerät 102 eine zweite Anfrage an die Kontrolleinrichtung 100, wobei mit der zweiten Anfrage das Gerät 102 ein zweites Zertifikat von der Kontrolleinrichtung 100 anfordert. In Schritt 504 sendet die Kontrolleinrichtung 100 das zweite Zertifikat an das Gerät 102. In der ersten Anfrage (siehe Schritt 500) oder mit dem Senden des zweiten Zertifikats (siehe Schritt 504) kann das Gerät 102 ferner von der Kontrolleinrichtung 100 angewiesen worden sein, dass sich die Person 104 gegenüber dem Gerät 102 authentifizieren muss. Das Gerät 102 fordert sodann in Schritt 506 Informationen von der Person 104 an, damit das Gerät 102 die Person 104 authentifizieren kann. Beispielsweise kann das Gerät 102 von der Person 104 einen PIN oder einen Fingerabdruck oder dergleichen abfragen. In Schritt 508 stellt die Person 104 dem Gerät 102 die angeforderten Informationen bereit. Das Gerät 102 verifiziert intern, ob die von der Person 104 bereitgestellten Informationen, den Informationen entsprechen, die auf dem Gerät 102 hinsichtlich der Person 104 hinterlegt sind, beispielsweise ob ein auf dem Gerät 102 hinterlegter PIN dem von der Person eingegebenen PIN entspricht. Ist dies der Fall, so erstellt das Gerät 102 das erste Zertifikat und sendet in Schritt 510 das erste Zertifikat an die Kontrolleinrichtung 100, wodurch die erste Person 104 gegenüber der Kontrolleinrichtung 100 authentifiziert werden kann.

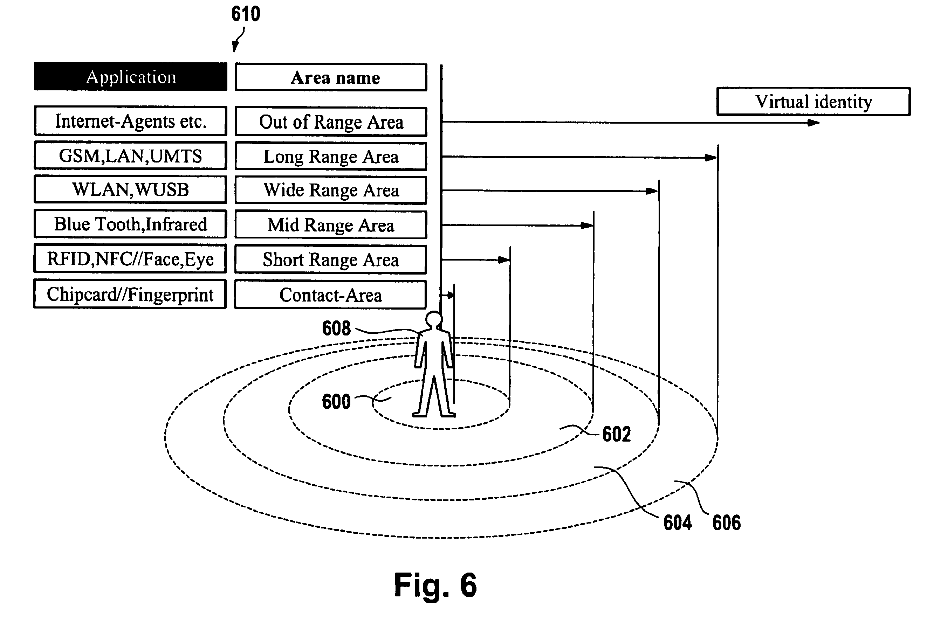

Fig. 6 zeigt illustrativ die Erfassungsbereiche 600, 602, 604, 606, innerhalb denen ein Gerät bzw. eine Person 608, die das Gerät mit sich trägt, in Abhängigkeit vom Typ der verwendeten Schnittstelle, von einer Kontrolleinrichtung detektiert werden kann und innerhalb welcher bestimmte personenbezogene Daten übermittelt werden.

In einer Tabelle 610 sind ferner in der linken Spalte Kommunikationstechnologien bzw. Protokolle angegeben, über die eine Kommunikation innerhalb der Erfassungsbereiche 600 - 606 möglich ist (vgl. hierzu auch die Pfeile rechts der Tabelle, die für jede Zeile der Tabelle die Reichweite in Bezug auf einen der Erfassungsbereiche 600-606 graphisch zeigen) und über die sich eine Person bzw. ein Gerät gegenüber einer Kontrolleinrichtung authentifizieren kann.
Bei den Kommunikationstechnologien handelt es sich gemäß der linken Spalte der Tabelle 610 von oben nach unten um:
- Kommunikation über Internetagenten, wobei der Erfassungsbereich im Prinzip unendlich groß ist, da eine Internetverbindung zur Kontrolleinrichtung aufgebaut wird,
- GSM, LAN, UMTS-Verbindungen, wobei die Reichweite sehr groß ist (bspw. innerhalb eines GSM-Netzes),
- WLAN, W-USB-Verbindungen, wobei die max. Reichweite bei etwa 25 m liegt,
- Bluetooth, Infrarot-Verbindungen mit einer Reichweite bis zu 15 m,
- RFID, NFC -Verbindungen mit einer Reichweite bis zu 5 m,
- Kontaktbehaftete Verbindungen, wobei eine Authentifizierung gegenüber der Kontrolleinrichtung mit einer Chipkarte oder einem Fingerprint erfolgt.

Ferner kann das Gerät so eingestellt sein, dass personenbezogene Daten nur an die Kontrolleinheit übermittelt werden, wenn eine entsprechende Kommunikationsverbindung zwischen der Kontrolleinheit und dem Gerät besteht. Verwendet das Gerät beispielsweise eine kontaktbehaftete Schnittstelle, so kann das Gerät bzw. die Person 608 nur detektiert werden, wenn es sich in unmittelbarer Nähe zur Kontrolleinrichtung befindet. Daher wird das Gerät bzw. die Person 608 bei Verwendung der kontaktbehaftete Schnittstellen nur innerhalb des Erfassungsbereichs 600 detektiert. Für diesen Bereich kann ferner festgelegt sein, dass selbst solche sensiblen Daten wie Fingerprints oder Irisabdrücke an die Kontrolleinheit übermittelt werden dürfen.

Verwendet das Gerät Funkschnittstellen, die zur Übertragung von kurzreichweitigen Signalen ausgelegt sind, wie etwa RFID, so kann das Gerät bzw. die Person 608 nur detektiert werden, wenn es sich nahe bei der Kontrolleinrichtung, d.h. innerhalb des Erfassungsbereichs 602, befindet. Für diesen Bereich kann ferner festgelegt sein, dass nicht solche sensiblen Daten wie Fingerprints an die Kontrolleinheit übermittelt werden dürfen, wohl aber der Name der Person oder das Geburtsdatum übertragen werden dürfen.

### Bezugszeichenliste

- 100: Kontrolleinrichtung
- 102: Gerät
- 104: Person
- 106: Mikroprozessor
- 108: Speicher
- 110: Iriskamera
- 112: Kommunikationsschnittstelle
- 114: Mikroprozessor
- 116: Speicher
- 118: Kommunikationsschnittstelle
- 120: Benutzeroberfläche
- 122: Eingabegerät
- 124: Computerprogrammprodukt
- 126: Computerprogrammprodukt
- 128: erstes Zertifikat
- 130: erste biometrische Daten
- 132: zweites Zertifikat
- 134: zweite biometrische Daten
- 136: erste Anfrage
- 138: zweite Anfrage
- 140: Erfassungsbereich
- 142: Luftschnittstelle
- 300: Gerät
- 304: RFID/NFC-Schnittstelle
- 304: Bluetooth-Schnittstelle
- 306: W-USB-Schnittstelle
- 308: WLAN-Schnittstelle
- 310: WiMAX-Schnittstelle
- 312: GSM-, GPRS-, UMTS-Schnittstelle
- 314: USB-Schnittstelle
- 316: Card Connector
- 318: Display
- 320: Tastatur
- 322: Fingerprint
- 324: Iris-Kamera
- 326: Unterschriftfeld
- 328: TPM-Modul
- 330: Akkumulator
- 332: Chipkarte
- 334: Signaturmechanismen
- 336: Verschlüsselungsmechanismen
- 338: Biometrie-Algorithmen
- 340: Netzwerk-Protokolle
- 342: Benutzerinformationen
- 400: Gerät
- 402: Person
- 404: Kontrolleinrichtung
- 406: Chipkarte
- 600: Erfassungsbereich
- 602: Erfassungsbereich
- 604: Erfassungsbereich
- 606: Erfassungsbereich
- 608: Person
- 610: Tabelle

## Patentansprüche

1. Verfahren zur Authentifizierung einer Person (104), wobei die Person ein portables Gerät (102) mit sich trägt, wobei das portable Gerät dazu ausgebildet ist, von einer Kontrolleinrichtung eine Authentifizierungsanforderung zu empfangen, gemäß welcher eine Authentifizierung der Person gegenüber dem portablen Gerät erfolgen muss, wobei das portable Gerät zumindest eine Schnittstelle (118) für die Kommunikation mit der Kontrolleinrichtung (100) aufweist, wobei das portable Gerät bei einer Annäherung an die Kontrolleinrichtung die folgenden Schritte ausführt:
- Empfang einer ersten Anfrage (136) von der Kontrolleinrichtung über die Schnittstelle, wobei mit der ersten Anfrage die Kontrolleinrichtung ein erstes Zertifikat (128) zur Authentifizierung der Person von dem portablen Gerät anfordert;
- Senden einer zweiten Anfrage (138) vom portablen Gerät an die Kontrolleinrichtung über die Schnittstelle, wobei mit der zweiten Anfrage das portable Gerät ein zweites Zertifikat (132) von der Kontrolleinrichtung anfordert;
- Überprüfung des zweiten Zertifikats durch das portable Gerät, wobei über das zweite Zertifikat festgestellt wird, ob die Kontrolleinrichtung eine Berechtigung hat, das erste Zertifikat von dem portablen Gerät anzufordern;
- Prüfung, ob das portable Gerät die Authentifizierungsanforderung von der Kontrolleinrichtung empfangen hat,
- Übermittlung des ersten Zertifikats an die Kontrolleinrichtung über die Schnittstelle, falls durch die Überprüfung des zweiten Zertifikats die Berechtigung der Kontrolleinrichtung festgestellt worden ist, wobei der Schritt der Authentifizierung der Person gegenüber dem portablen Gerät nur dann durchgeführt wird, wenn die Authentifizierungsanforderung von dem portablen Gerät empfangen worden ist, wobei das portable Gerät für die Authentifizierung der Person personenbezogene Daten (130) von der Person abfragt und für die Authentifizierung der Person gegenüber dem portablen Gerät die abgefragten personenbezogenen Daten vom portablen Gerät verifiziert werden.

2. Verfahren nach Anspruch 1, wobei die Authentifizierungsanforderung mit der ersten Anfrage empfangen wird.

3. Verfahren nach Anspruch 1, wobei die Authentifizierungsanforderung Teil des zweiten Zertifikats ist.

4. Verfahren nach Anspruch 1, 2 oder 3, wobei die Authentifizierungsanforderung signiert ist, und wobei das portable Gerät die Signatur der Authentifizierungsanforderung verifiziert, bevor das erste Zertifikat an die Kontrolleinrichtung übermittelt wird.

5. Verfahren nach einem der vorherigen Ansprüche, wobei sich die Person durch eine der Person zugeordnete Chipkarte (332; 406) und durch Eingabe einer der Chipkarte und einer ihr zugeordneten PIN gegenüber dem portablen Gerät authentifiziert.

6. Verfahren nach einem der vorhergehenden Ansprüche, wobei es sich bei den personenbezogenen Daten um erste biometrische Daten (130) der Person handelt, wobei die ersten biometrischen Daten auf dem portablen Gerät hinterlegt sind, wobei die ersten biometrischen Daten mit zweiten biometrischen Daten verglichen werden, wobei die zweiten biometrischen Daten von der Person abgefragt werden.

7. Verfahren nach einem der vorhergehenden Ansprüche, ferner mit den Schritten:
- Empfang von zweiten biometrischen Daten (134) von der Kontrolleinrichtung;
- Abgleich der ersten biometrischen Daten mit den zweiten biometrischen Daten.
- Übermittlung des ersten Zertifikats an die Kontrolleinrichtung über die Schnittstelle, falls durch den Abgleich der ersten und zweiten biometrischen Daten durch das portable Gerät festgestellt worden ist, das die zweiten biometrischen Daten der Person zugeordnet sind oder Übermittlung einer positiven Bestätigungsnachricht mit dem ersten Zertifikat, falls durch den Abgleich der ersten und zweiten biometrischen Daten durch das portable Gerät festgestellt worden ist, das die zweiten biometrischen Daten der Person zugeordnet sind und Übermittlung einer negativen Bestätigungsnachricht, falls durch den Abgleich der ersten und zweiten biometrischen Daten durch das portable Gerät festgestellt worden ist, das die zweiten biometrischen Daten nicht der Person zugeordnet sind.

8. Verfahren nach einem der vorhergehenden Ansprüche, wobei personenbezogene Daten mit dem ersten Zertifikat an die Kontrolleinrichtung übermittelt werden, falls durch die Überprüfung des zweiten Zertifikats die Berechtigung der Kontrolleinrichtung zur Abfrage der personenbezogenen Daten festgestellt worden ist.

9. Verfahren zur Authentifizierung einer Person (104) , wobei die Person ein portables Gerät (102) mit sich trägt, wobei das portable Gerät zumindest eine Schnittstelle (118) für die Kommunikation mit einer Kontrolleinrichtung (100) aufweist, wobei die Kontrolleinrichtung die folgenden Schritte ausführt:
- Detektion des portablen Geräts;
- Senden einer ersten Anfrage (136) von der Kontrolleinrichtung über die Schnittstelle an das portable Gerät, wobei mit der ersten Anfrage die Kontrolleinrichtung ein erstes Zertifikat (128) zur Authentifizierung der Person von dem portablen Gerät anfordert;
- Empfang einer zweiten Anfrage (138) vom portablen Gerät, wobei mit der zweiten Anfrage das portable Gerät ein zweites Zertifikat (132) von der Kontrolleinrichtung anfordert;- Senden des zweiten Zertifikats an das portable Gerät, wobei über das zweite Zertifikat die Kontrolleinrichtung gegenüber dem portablen Gerät einen Nachweis der Berechtigung zur Abfrage des ersten Zertifikats erbringt, wobei die Kontrolleinrichtung einer Authentifizierungsanforderung an das portable Gerät sendet, gemäß welcher eine Authentifizierung der Person gegenüber dem portablen Gerät erfolgen muss, wenn sich die Kontrolleinrichtung in einem ersten Betriebsmodus befindet, und wobei die Kontrolleinrichtung die Authentifizierungsanforderung nicht an das portable Gerät sendet, wenn sich die Kontrolleinrichtung in einem zweiten Betriebsmodus befindet;
- Erfassung von biometrischen Daten der Person;
- Übermittlung der biometrischen Daten an das portable Gerät, wobei das portable Gerät ermittelt, ob die biometrischen Daten mit den auf dem portablen Gerät hinterlegten biometrischen Daten für die Person übereinstimmen, wobei das portable Gerät eine Übereinstimmung oder Nichtübereinstimmung der biometrischen Daten der Kontrolleinrichtung anzeigt.

10. Verfahren nach Anspruch 9, ferner mit dem Schritt des Empfangs des ersten Zertifikats, wobei mittels des ersten Zertifikats die Person gegenüber der Kontrolleinrichtung authentifiziert wird.

11. Computerprogrammprodukt mit ausführbaren Programminstruktionen zur Durchführung des Verfahrens nach einem der Ansprüche 1 bis 8.

12. Computerprogrammprodukt mit ausführbaren Programminstruktionen zur Durchführung des Verfahrens nach einem der Ansprüche 9 bis 10.

13. Portables Gerät (102) zur Authentifizierung einer Person (104) mit:
- mindestens einer Schnittstelle (118; 302, 304, 306, 308, 310, 312, 314, 316) für die Kommunikation mit einer Kontrolleinrichtung (100);
- Mitteln (114, 126) zum Empfang einer ersten Anfrage (136) von der Kontrolleinrichtung über die Schnittstelle, wobei mit der ersten Anfrage die Kontrolleinrichtung ein erstes Zertifikat (128) zur Authentifizierung der Person von dem portablen Gerät anfordert;
- Mitteln (114, 126) zum Senden einer zweiten Anfrage (138) vom portablen Gerät an die Kontrolleinrichtung über die Schnittstelle, wobei mit der zweiten Anfrage das portable Gerät ein zweites Zertifikat (132) von der Kontrolleinrichtung anfordert;
- Mitteln (114, 126) zur Überprüfung des zweiten Zertifikats durch das portable Gerät, wobei über das zweite Zertifikat festgestellt wird, ob die Kontrolleinrichtung eine Berechtigung hat, das erste Zertifikat von dem portablen Gerät anzufordern;
- Mitteln (114, 126) zum Empfang einer Authentifizierungsanforderung von der Kontrolleinrichtung, gemäß welcher eine Authentifizierung der Person gegenüber dem portablen Gerät erfolgen muss,
- Mitteln (130; 320,322, 324, 326) zur Authentifizierung der Person gegenüber dem portablen Gerät,
- Mitteln (114, 126) zur Übermittlung des ersten Zertifikats an die Kontrolleinrichtung über die Schnittstelle, unter der Voraussetzung, dass durch die Überprüfung des zweiten Zertifikats die Berechtigung der Kontrolleinrichtung festgestellt worden ist, und für den Fall, dass die Authentifizierungsanforderung empfangen worden ist, unter der zusätzlichen Voraussetzung, dass sich die Person gegenüber dem portablen Gerät authentifiziert hat;
- Mitteln (120; 318) zur Abfrage und/oder zur Erfassung (122; 320, 322, 324, 326) von personenbezogenen Daten von der Person;
- Mitteln (114, 126) zur Verifizierung der abgefragten personenbezogenen Daten.

14. Portables Gerät nach Anspruch 13, wobei es sich bei den personenbezogenen Daten um erste biometrische Daten (130) betreffend die Person handelt, wobei das portable Gerät Mittel zum Speichern der ersten biometrischen Daten und Mitteln zum Vergleichen der ersten biometrischen Daten mit zweiten biometrischen Daten aufweist, wobei die zweiten biometrischen Daten von der Person abfragbar sind.

15. Kontrolleinrichtung (100) zur Authentifizierung einer Person, wobei die Person ein portables Gerät (102) mit sich trägt, wobei das portable Gerät zumindest eine Schnittstelle (118) für die Kommunikation mit der Kontrolleinrichtung aufweist, wobei die Kontrolleinrichtung folgendes aufweist:
- Mittel (112) zur Detektion des portablen Geräts;
- Mittel (106, 124) zum Senden einer ersten Anfrage (136) von der Kontrolleinrichtung über die Schnittstelle an das portable Gerät, wobei mit der ersten Anfrage die Kontrolleinrichtung ein erstes Zertifikat (128) zur Authentifizierung der Person von dem portablen Gerät anfordert;
- Mittel (106, 124) zum Empfang einer zweiten Anfrage (138) vom portablen Gerät, wobei mit der zweiten Anfrage das portable Gerät ein zweites Zertifikat (132) von der Kontrolleinrichtung anfordert;
- Mittel (106, 124) zum Senden zweiten Zertifikats an das portable Gerät, wobei über das zweite Zertifikat die Kontrolleinrichtung einen Nachweis der Berechtigung zur Abfrage des ersten Zertifikats erbringt,
- Mittel (106, 124) zum Senden einer Authentifizierungsanforderung an das portable Gerät, gemäß welcher eine Authentifizierung der Person gegenüber dem portablen Gerät erfolgen muss, wenn sich die Kontrolleinrichtung in einem ersten Betriebsmodus befindet
- Mitteln (110) zur Erfassung von biometrischen Daten (134) der Person;
- Mitteln (106, 124) zur Übermittlung der biometrischen Daten an das portable Gerät, wobei das portable Gerät ermittelt, ob die biometrischen Daten mit den auf dem portablen Gerät hinterlegten biometrischen Daten (130) für die Person übereinstimmen.

## Claims

1. A method for authenticating a person (104), wherein the person carries a portable device (102), wherein the portable device is designed to receive from a control arrangement an authentication request, in accordance with which the person must be authenticated to the portable device, wherein the portable device comprises at least one interface (118) for the communication with the control arrangement (100), wherein the portable device, as it approaches the control arrangement, performs the following steps:
- receiving a first inquiry (136) from the control arrangement via the interface, wherein, with the first inquiry, the control arrangement requests a first certificate (128) from the portable device for authentication of the person;
- sending a second inquiry (138) from the portable device to the control arrangement via the interface, wherein, with the second inquiry, the portable device requests a second certificate (132) from the control arrangement;
- checking the second certificate using the portable device, wherein it is established on the basis of the second certificate whether the control arrangement is authorised to request the first certificate from the portable device;
- checking whether the portable device has received the authentication request from the control arrangement,
- transmitting the first certificate to the control arrangement via the interface if the check of the second certificate has established the authorisation of the control arrangement, wherein the step of authentication of the person to the portable device is then only carried out when the authentication request has been received by the portable device, wherein, for the authentication of the person, the portable device requests personal data (130) from the person, and, for the authentication of the person to the portable device, the requested personal data are verified by the portable device.

2. The method according to Claim 1, wherein the authentication request is received with the first inquiry.

3. The method according to Claim 1, wherein the authentication request is part of the second certificate.

4. The method according to Claim 1, 2 or 3, wherein the authentication request is signed, and wherein the portable device verifies the signature of the authentication request before the first certificate is transmitted to the control arrangement.

5. The method according to one of the preceding claims, wherein the person is authenticated to the portable device by a chip card (332; 406) associated with the person and by inputting a PIN associated with the chip card and with the person.

6. The method according to one of the preceding claims, wherein the personal data are first biometric data (130) belonging to the person, wherein the first biometric data are stored on the portable device, wherein the first biometric data are compared with second biometric data, wherein the second biometric data are requested from the person.

7. The method according to one of the preceding claims, further comprising the following steps:
- receiving second biometric data (134) from the control arrangement;
- comparing the first biometric data with the second biometric data,
- transmitting the first certificate to the control arrangement via the interface if, on the basis of the comparison of the first and second biometric data using the portable device, it is established that the second biometric data are associated with the person, or transmitting a positive confirmation message with the first certificate if, on the basis of the comparison of the first and second biometric data using the portable device, it is established that the second biometric data are associated with the person, and transmitting a negative confirmation message if, on the basis of the comparison of the first and second biometric data by the portable device, it is established that the second biometric data are not associated with the person.

8. The method according to one of the preceding claims, wherein personal data are transmitted with the first certificate to the control arrangement if, on the basis of the check of the second certificate, it is established that the control arrangement is authorised to request the personal data.

9. A method for authenticating a person (104), wherein the person carries a portable device (102), wherein the portable device comprises at least one interface (118) for communication with a control arrangement (100), wherein the control arrangement carries out the following steps:
- detecting the portable device;
- sending a first inquiry (136) from the control arrangement via the interface to the portable device, wherein, with the first inquiry, the control arrangement requests a first certificate (128) from the portable device for authentication of the person;
- receiving a second inquiry (138) from the portable device, wherein, with the second inquiry, the portable device requests a second certificate (132) from the control arrangement;
- sending the second certificate to the portable device, wherein the control arrangement, via the second certificate, provides proof to the portable device of the authorisation to request the first certificate, wherein the control arrangement sends to the portable device an authentication request, in accordance with which the person must be authenticated to the portable device if the control arrangement is in a first operating mode, and wherein the control arrangement does not send the authentication request to the portable device if the control arrangement is in a second operating mode;
- capturing biometric data belonging to the person;
- transmitting the biometric data to the portable device, wherein the portable device ascertains whether the biometric data match the biometric data for the person stored on the portable device, wherein the portable device displays to the control arrangement a match or mismatch of the biometric data.

10. The method according to Claim 9, further comprising the step of receiving the first certificate, wherein the person is authenticated to the control arrangement by means of the first certificate.

11. A computer program product with executable program instructions for carrying out the method according to one of Claims 1 to 8.

12. A computer program product with executable program instructions for carrying out the method according to one of Claims 9 to 10.

13. A portable device (102) for authenticating a person (104), said portable device comprising:
- at least one interface (118; 302, 304, 306, 308, 310, 312, 314, 316) for the communication with a control arrangement (100);
- means (114, 126) for receiving a first inquiry (136) from the control arrangement via the interface, wherein, with the first inquiry, the control arrangement requests a first certificate (128) from the portable device for authentication of the person;
- means (114, 126) for sending a second inquiry (138) from the portable device to the control arrangement via the interface, wherein, with the second inquiry, the portable device requests a second certificate (132) from the control arrangement;
- means (114, 126) for checking the second certificate using the portable device, wherein it is established on the basis of the second certificate whether the control arrangement is authorised to request the first certificate from the portable device;
- means (114, 126) for receiving from the control arrangement an authentication request, in accordance with which the person must be authenticated to the portable device,
- means (130; 320, 322, 324, 326) for authenticating the person to the portable device,
- means (114, 126) for transmitting the first certificate to the control arrangement via the interface on the condition that the authorisation of the control arrangement has been established on the basis of the check of the second certificate, and, if the authentication request has been received, on the additional condition that the person has been authenticated to the portable device;
- means (120; 318) for requesting and/or capturing (122; 320, 322, 324, 326) personal data from the person;
- means (114, 126) for verifying the requested personal data.

14. The portable device according to Claim 13, wherein the personal data are first biometric data (130) concerning the person, wherein the portable device comprises means for storing the first biometric data and means for comparing the first biometric data with second biometric data, wherein the second biometric data can be requested from the person.

15. A control arrangement (100) for authenticating a person, wherein the person carries a portable device (102), wherein the portable device comprises at least one interface (118) for the communication with the control arrangement, wherein the control arrangement comprises the following:
- means (112) for detecting the portable device;
- means (106, 124) for sending a first inquiry (136) from the control arrangement via the interface to the portable device, wherein, with the first inquiry, the control arrangement requests a first certificate (128) from the portable device for authenticating the person;
- means (106, 124) for receiving a second inquiry (138) from the portable device, wherein, with the second inquiry, the portable device requests a second certificate (132) from the control arrangement;
- means (106, 124) for sending the second certificate to the portable device, wherein the control arrangement, via the second certificate, provides proof of the authorisation to request the first certificate;
- means (106, 124) for sending to the portable device an authentication request, in accordance with which the person must be authenticated to the portable device when the control arrangement is in a first operating mode;
- means (110) for capturing biometric data (134) belonging to the person;
- means (106, 124) for transmitting the biometric data to the portable device, wherein the portable device ascertains whether the biometric data match biometric data (130) for the person stored on the portable device.

## Revendications

1. Procédé pour l'authentification d'une personne (104), dans lequel la personne transporte avec elle un appareil portable (102), dans lequel l'appareil portable est conçu pour recevoir une demande d'authentification de la part d'un dispositif de contrôle, selon laquelle une authentification de la personne vis-à-vis de l'appareil portable doit être effectuée, dans lequel l'appareil portable comporte au moins une interface (118) pour communiquer avec le dispositif de contrôle (100), dans lequel l'appareil portable exécute les étapes suivantes lors d'un rapprochement avec le dispositif de contrôle :
- réception d'une première demande (136) du dispositif de contrôle par le biais de l'interface, où, avec la première demande, le dispositif de contrôle demande à l'appareil portable un premier certificat (128) pour l'authentification de la personne ;
- envoi d'une deuxième demande (138) de l'appareil portable au dispositif de contrôle par le biais de l'interface, où, avec la deuxième demande, l'appareil portable demande un deuxième certificat (132) au dispositif de contrôle ;
- vérification du deuxième certificat par l'appareil portable, où le deuxième certificat permet de déterminer si le dispositif de contrôle est autorisé à demander le premier certificat à l'appareil portable ;
- vérification de la réception de la demande d'authentification du dispositif de contrôle par l'appareil portable,
- transmission de ce certificat au dispositif de contrôle par le biais de l'interface, si la vérification du deuxième certificat a permis de déterminer l'autorisation du dispositif de contrôle,
dans lequel l'étape d'authentification de la personne vis-à-vis de l'appareil portable n'est exécutée que si la demande d'authentification a été reçue par l'appareil portable, dans lequel, pour l'authentification de la personne, l'appareil portable extrait des données relatives à la personne (130), et dans lequel, pour l'authentification de la personne vis-à-vis de l'appareil portable, les données relatives à la personne extraites sont vérifiées par l'appareil portable.

2. Procédé selon la revendication 1, dans lequel la demande d'authentification est reçue avec la première demande.

3. Procédé selon la revendication 1, dans lequel la demande d'authentification fait partie du deuxième certificat.

4. Procédé selon la revendication 1, 2 ou 3, dans lequel la demande d'authentification est signée, et dans lequel l'appareil portable vérifie la signature de la demande d'authentification avant la transmission du deuxième certificat au dispositif de contrôle.

5. Procédé selon l'une des revendications précédentes, dans lequel la personne s'authentifie vis-à-vis de l'appareil portable à l'aide d'une carte à puce (332 ; 406) attribuée à la personne, et par la saisie d'un code PIN attribué à la carte à puce et d'un code PIN attribué à elle-même.

6. Procédé selon l'une des revendications précédentes, dans lequel les données relatives à la personne sont des premières données biométriques (130) de la personne, dans lequel les premières données biométriques sont enregistrées dans l'appareil portable, dans lequel les premières données biométriques sont comparées avec des deuxièmes données biométriques, dans lequel les deuxièmes données biométriques sont extraites par la personne.

7. Procédé selon l'une des revendications précédentes, comprenant en outre les étapes suivantes :
- réception de deuxièmes données biométriques (134) venant du dispositif de contrôle ;
- comparaison des premières données biométriques avec les deuxièmes données biométriques.
- transmission du premier certificat au dispositif de contrôle par le biais de l'interface, si la comparaison des premières et deuxièmes données biométriques par l'appareil portable a permis de constater que les deuxièmes données biométriques sont attribuées à la personne, ou transmission d'un message de confirmation positif avec le premier certificat, si la comparaison des premières et deuxièmes données biométriques par l'appareil portable a permis de constater que les deuxièmes données biométriques sont attribuées à la personne, et transmission d'un message de confirmation négatif si la comparaison des premières et deuxièmes données biométriques par l'appareil portable a permis de constater que les deuxièmes données biométriques ne sont pas attribuées à la personne.

8. Procédé selon l'une des revendications précédentes, dans lequel des données relatives à la personne sont transmises au dispositif de contrôle ensemble avec le premier certificat, si la vérification du deuxième certificat a permis de constater que le dispositif de contrôle est autorisé à demander les données relatives à la personne.

9. Procédé pour l'authentification d'une personne (104), dans lequel la personne transporte avec elle un appareil portable (102), dans lequel l'appareil portable comporte au moins une interface (118) pour communiquer avec un dispositif de contrôle (100), dans lequel le dispositif de contrôle exécute les étapes suivantes :
- détection de l'appareil portable ;
- envoi d'une première demande (136) du dispositif de contrôle à l'appareil portable par le biais de l'interface, où, avec la première demande, le dispositif de contrôle demande un premier certificat (128) à l'appareil portable ;
- réception d'une deuxième demande (138) de l'appareil portable, où, avec la deuxième demande, l'appareil portable demande un deuxième certificat (132) au dispositif de contrôle ;
- envoi du deuxième certificat à l'appareil portable, où, avec le deuxième certificat, le dispositif de contrôle apporte une preuve de l'autorisation de demander le premier certificat vis-à-vis de l'appareil portable,
dans lequel le dispositif de contrôle envoie une demande d'authentification à l'appareil portable, selon laquelle une authentification de la personne vis-à-vis de l'appareil portable doit être effectuée, si le dispositif de contrôle se trouve dans un premier mode de fonctionnement, et dans lequel le dispositif de contrôle n'envoie pas la demande d'authentification à l'appareil portable, si le dispositif de contrôle se trouve dans un deuxième mode de fonctionnement ;
- saisie de données biométriques de la personne ;
- transmission des données biométriques à l'appareil portable, où l'appareil portable détermine si les données biométriques concordent avec les données biométriques enregistrées sur l'appareil portable pour la personne, où l'appareil portable indique au dispositif de contrôle la concordance ou la non-concordance des données biométriques.

10. Procédé selon la revendication 9, comprenant en outre l'étape de réception du premier certificat, dans lequel le premier certificat permet d'authentifier la personne vis-à-vis du dispositif de contrôle.

11. Produit de programme informatique avec des instructions de programme exécutables, pour l'exécution du procédé selon l'une des revendications 1 à 8.

12. Produit de programme informatique avec des instructions de programme exécutables, pour l'exécution du procédé selon l'une des revendications 9 à 10.

13. Appareil portable (102) pour l'authentification d'une personne (104) avec :
- au moins une interface (118 ; 302, 304, 306, 308, 310, 312, 314, 316) pour la communication avec un dispositif de contrôle (100) ;
- des moyens (114, 126) pour la réception d'une première demande (136) du dispositif de contrôle par le biais de l'interface, où, avec la première demande, le dispositif de contrôle demande un premier certificat (128) pour l'authentification de la personne vis-à-vis de l'appareil portable ;
- des moyens (114, 126) pour l'envoi d'une deuxième demande (138) de l'appareil portable au dispositif de contrôle par le biais de l'interface, où, avec la deuxième demande, l'appareil portable demande un deuxième certificat (132) au dispositif de contrôle ;
- des moyens (114, 126) pour la vérification du deuxième certificat par l'appareil portable, où le deuxième certificat permet de constater si le dispositif de contrôle est autorisé à demander le premier certificat à l'appareil portable ;
- des moyens (114, 126) pour la réception d'une demande d'authentification du dispositif de contrôle, selon laquelle une authentification de la personne vis-à-vis de l'appareil portable doit être effectuée,
- des moyens (130 ; 320, 322, 324, 326) pour l'authentification de la personne vis-à-vis de l'appareil portable,
- des moyens (114, 126) pour la transmission du premier certificat au dispositif de contrôle par le biais de l'interface, à condition que la vérification du deuxième certificat ait permis de constater l'autorisation du dispositif de contrôle, et à condition que la personne se soit authentifiée vis-à-vis de l'appareil portable, dans le cas où la demande d'authentification a été reçue ;
- des moyens (120 ; 318) pour l'extraction et/ou la saisie de données relatives à la personne par la personne ;
- des moyens (114, 126) pour la vérification des données relatives à la personne extraites.

14. Appareil portable selon la revendication 13, dans lequel les données relatives à la personne sont des premières données biométriques (130) concernant la personne, dans lequel l'appareil portable comporte des moyens pour l'enregistrement des premières données biométriques et des moyens pour la comparaison des premières données biométriques avec des deuxièmes données biométriques, dans lequel les deuxièmes données biométriques peuvent être extraites par la personne.

15. Dispositif de contrôle (100) pour l'authentification d'une personne, dans lequel la personne transporte avec elle un appareil portable (102), dans lequel l'appareil portable comporte au moins une interface (118) pour communiquer avec le dispositif de contrôle, dans lequel le dispositif de contrôle comporte :
- des moyens (112) pour la détection de l'appareil portable ;
- des moyens (106, 124) pour l'envoi d'une première demande (136) du dispositif de contrôle à l'appareil portable par le biais de l'interface, où, avec la première demande, le dispositif de contrôle demande un premier certificat (128) pour l'authentification de la personne à l'appareil portable ;
- des moyens (114, 126) pour la réception d'une deuxième demande (138) de l'appareil portable, où, avec la deuxième demande, l'appareil portable demande un deuxième certificat (132) au dispositif de contrôle ;
- des moyens (106, 124) pour l'envoi du deuxième certificat à l'appareil portable, où, avec le deuxième certificat, le dispositif de contrôle apporte une preuve de l'autorisation de demander le premier certificat,
- des moyens (106, 124) pour l'envoi d'une demande d'authentification à l'appareil portable, selon laquelle une authentification de la personne vis-à-vis de l'appareil portable doit être effectuée lorsque le dispositif de contrôle se trouve dans un premier mode de fonctionnement,
- des moyens (110) pour la collecte de données biométriques (134) de la personne ;
- des moyens (106, 124) pour la transmission des données biométriques à l'appareil portable, où l'appareil portable détermine si les données biométriques concordent avec les données biométriques (130) enregistrées sur l'appareil portable pour la personne.
